# EUROPÄISCHE PATENTSCHRIFT

(11) **EP 3 584 493 B1**
(45) Veröffentlichungstag und Bekanntmachung des Hinweises auf die Patenterteilung: **28.07.2021**
(21) Anmeldenummer: 19000276.6
(22) Anmeldetag: 06.06.2019
(51) Int. Cl.: F21S 4/28, F21S 9/03, F21V 23/00, F21V 23/06, F21V 31/00, F21V 33/00, F21S 8/00, F21V 15/00, F21V 17/10, F21V 17/12, F21V 17/16, F21V 23/02, F21V 23/04, F21W 131/10, F21Y 103/10, F21Y 115/10, E04H 17/16

(54) **ELEKTRISCH BETRIEBENES BELEUCHTUNGSSYSTEM**
ELECTRICALLY DRIVEN LIGHTING SYSTEM
SYSTÈME D'ÉCLAIRAGE À COMMANDE ÉLECTRIQUE

(30) Priorität: 08.06.2018 DE 202018002737 U
(43) Veröffentlichungstag der Anmeldung: 25.12.2019
(73) Patentinhaber: Rieck, Markus, 96117 Memmelsdorf (DE)
(72) Erfinder: Rieck, Markus, 96117 Memmelsdorf (DE)
(74) Vertreter: Findeisen, Andreas

(56) Entgegenhaltungen:
- CN-A- 101 831 880
- CN-A- 104 088 236
- DE-U1-202006 011 477
- US-A1- 2010 237 307
- US-A1- 2015 204 489
- US-A1- 2018 142 876
- US-B1- 9 976 730

## Beschreibung

Die Erfindung betrifft ein elektrisch betriebenes Beleuchtungssystem, wobei dieses Beleuchtungssystem zumindest einen länglichen Leuchtkörper aufweist, der mit einer oder mehreren steckbaren oder fest verbundenen Kabeln mit einer Stromversorgung verbunden ist und wobei der zumindest eine längliche Leuchtkörper mindestens eine linienförmige Lichtquelle enthält und an einem Profil befestigt ist.

Üblicherweise wird die Beleuchtung eines Gartens, eines Wegs oder öffentlichen Bereichs von separaten Leuchten realisiert, die punktuell abstrahlen. Auch eine Effektbeleuchtung wird üblicherweise punktuell realisiert. Zur Ausleuchtung von Flächen sind entweder aufwändige Masten notwendig oder es besteht bei einer Anordnung punktueller Lichtquellen auf niedriger Höhe Blendgefahr. Weiterhin greifen die bekannten Leuchten optisch massiv in den betroffenen Bereich ein und können als störend empfunden werden.

Lichterketten, sowohl konventionell als auch in LED-Ausführung sowie LED-Stripes sind biegeschlaff und benötigen eine Trägerstruktur, um eine exakt gerade linienförmige Lichtquelle darzustellen.

In Profile eingelassene LED-Stripes nach dem Stand der Technik haben kein definiertes Ausleuchtungsfeld, sondern streuen Undefiniert über eine Abdeckscheibe.

Aus dem Stand der Technik ist es aus DE 102 39 983 A1 bekannt, Lichtriegel an einem Zaunelement vorzusehen, die an einem Querprofil des Zaunelementes angeklipst werden. Zur Stromzuführung sind in dem Querprofil Kabelkanäle eingearbeitet. Die Verlegung der Stromzuführung im Querprofil ist aber nachteilig, da das Querprofil hierzu geöffnet werden muss und damit die Zaunstäbe das Zaunelementes nicht mehr fixiert sind, sodass das Zaunelement in sich instabil wird. Weiterhin muss für jeden Lichtriegel ein separates Kabel in dem Querprofil verlegt werden, was die Verkabelung aufwendig macht.

Die US 2018/0142876 A1 beschreibt ein Leuchtelement, welches ein kastenförmiges Gehäuse mit inneliegendem Leuchtmittel aufweist. Das Leuchtmittel ist weiterhin mit einer als Linse wirkenden Abdeckung versehen. Für eine Reihenschaltung mehrerer dieser Leuchtelemente weisen diese elektrische Steckverbindungen auf.

Eine ähnliche Lösung wird in der DE 20 2006 011 477 U1 beschrieben, wobei auch hier die Leuchtmittel in einem abgeschlossenen Gehäuse integriert sind. Das Gehäuse ist für Lichtstrahlung durchlässig oder zumindest halbdurchlässig ausgeführt.

In der US 9,976,730 B1 wird ebenfalls ein längliches Gehäuse mit lichtdurchlässiger Abdeckung offenbart, wobei dabei ein abgeschlossener Raum zur Aufnahme von länglichen Leuchtmitteln gebildet wird.

Aus der CN 101831880 A ist ein Zaunelement bekannt, wobei am Zaunelement Leuchtmittel vorgesehen sind. In einem Zaunpfosten sind eine Stromquelle und eine Steuereinheit zum Betrieb der Leuchtmittel integriert.

Eine ähnliche Lösung wird in der CN 104088236 A offenbart. Auch hier wird ein Zaunelement mit angebrachten Leuchtmitteln beschrieben, bei dem eine Stromquelle und eine Steuereinheit zum Betrieb der Leuchtmittel integriert sind.

Die US 2010/0237307 A1 beschreibt ein Zaunelement mit integrierten Leuchtmitteln. Weiterhin sind eine im Zaunelement integrierte Batterie zur Stromversorgung der Leuchtmittel und eine am Zaunelement angebrachte Solarzelle zum Aufladen der Batterie vorgesehen.

In der US 2015/0204489 A1 wird längliches Leuchtelement beschrieben, wobei dieses Leuchtelement ein Profil aufweist, welches mit einem für Lichtstrahlung durchlässigen Deckel verschließbar ist. Von dem Profil und dem Deckel wird damit ein geschlossenes Gehäuse gebildet, in welchem Leuchtmittel integriert sind. Dabei wirkt der Deckel des Leuchtelementes als Linse zur Lichtlenkung.

Aufgabe der Erfindung ist es, ein Beleuchtungssystem zu schaffen, bei dem der Installationsaufwand deutlich verringert wird.

Diese Aufgabe wird mit einem Beleuchtungssystem mit den Merkmalen des Anspruchs 1 gelöst. Vorteilhafte Ausgestaltungen sind in den Ansprüchen 2 bis 7 aufgezeigt.

Bei dem erfindungsgemäßen Beleuchtungssystem können mehrere Leuchtkörper über die elektrische Steckverbindung miteinander verbunden werden. Damit genügt es, einen der Leuchtkörper direkt mit der Stromversorgung zu verbinden. Die weiteren Leuchtkörper (oder auch andere elektrische Verbraucher) werden über die elektrische Verbindung von einem zum nächsten Leuchtkörper mit Strom versorgt. Somit muss nun nicht jeder Leuchtkörper separat mit der Stromversorgung verbunden werden, was insgesamt den Verkabelungsaufwand bzw. Installationsaufwand verringert.

Nachfolgend wird ein Ausführungsbeispiel der Erfindung anhand der Zeichnungen erläutert. Es zeigen:
- Fig. 1: ein Zaunfeld mit einem erfindungsgemäßen Beleuchtungssystem
- Fig. 2: zeigt den Aufbau eines Leuchtkörpers des Beleuchtungssystems gemäß Fig. 1
- Fig. 3: den Aufbau einer weiteren Ausführung des Leuchtkörpers
- Fig. 4: eine Schnittdarstellung einer Ausführung des Leuchtkörpers
- Fig. 5: eine Schnittdarstellung eines mehrfach gekanteten Profils des Beleuchtungssystems
- Fig. 6: eine Schnittdarstellung eines gerundet ausgebildeten Profils des Beleuchtungssystems
- Fig. 7: eine Schnittdarstellung des Leuchtkörpers mit einer Abdeckung
- Fig. 8: eine Schnittdarstellung einer weiteren Ausführung des Beleuchtungssystems mit zwei Leuchtkörpern
- Fig. 9: eine Befestigung des länglichen Leuchtkörpers an einem Zaun
- Fig. 10: eine weitere Ausführung der Befestigung des länglichen Leuchtkörpers an einem Zaun in einer Schnittdarstellung
- Fig. 11: in einem Querschnitt die Befestigung des länglichen Leuchtkörpers an einer Mauern
- Fig. 12: ein Zaunfeld mit dem erfindungsgemäßen Beleuchtungssystem und einer in einem Zaunpfosten integrierten Stromversorgung

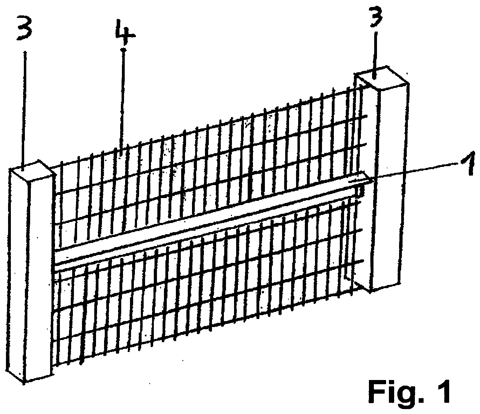

**Fig. 1** zeigt ein Zaunfeld bestehend aus 2 Pfosten 3 und einer Zaunmatte 4 mit einem horizontal angebrachten länglichen Leuchtkörper 1.

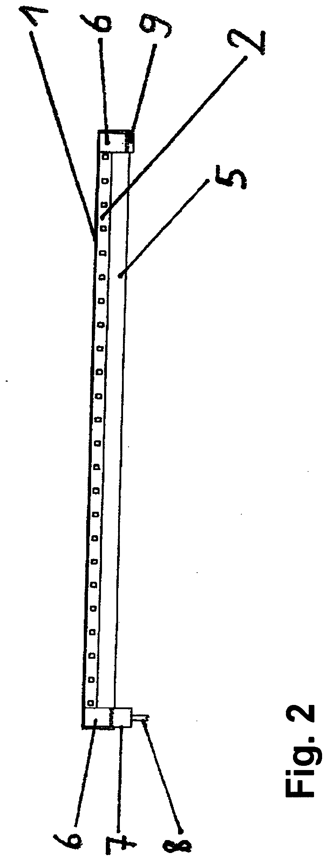

**Fig. 2** zeigt den Aufbau des Leuchtkörpers 1 in der Vorderansicht. Der Leuchtkörper 1 besteht aus der linienförmigen Lichtquelle 2, aus einem Profil 5, aus einer elektrischen Steckverbindung 6, in die zur Stromversorgung ein Stecker 7 mit Kabel 8 gesteckt wird. Die linienförmige Lichtquelle 2 kann auch aus einer Aneinanderreihung von Einzellichtquellen bestehen. Wird eine Steckverbindung 6 an einem Ende nicht zur Stromweiterleitung zu einem weiteren länglichen Leuchtkörper 1 oder einem anderen elektrischen Verbraucher benötigt, so kann sie durch einen Verschluss 9 verschlossen und vor Witterungseinflüssen und Verschmutzung geschützt werden.

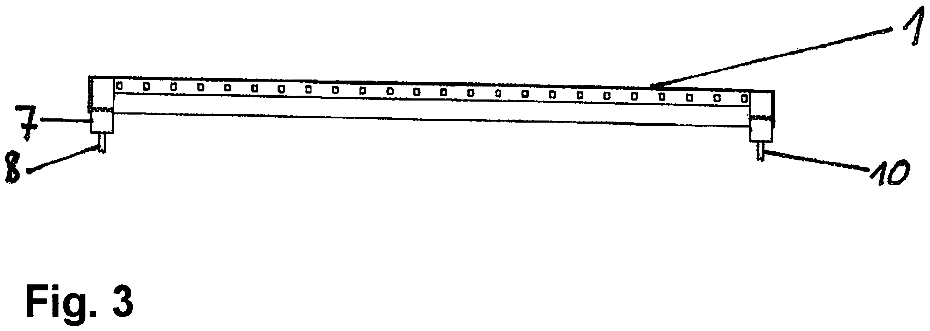

**Fig. 3** zeigt eine weitere Ausführung des Leuchtkörpers 1. Ein Ende des Leuchtkörpers 1 ist über die Steckverbindung 6 mit dem Kabel 8 verbunden, welches zur Stromversorgung führt. Am anderen Ende des Leuchtkörpers 1 ist an der Steckverbindung 6 ein Kabel 10 vorgesehen, welches eine elektrische Verbindung zu einem weiteren Leuchtkörper oder einem anderen elektrischen Verbraucher herstellt, worüber dieser weitere Leuchtkörper oder dieser andere elektrische Verbraucher mit Strom, der von der Stromversorgung durch den Leuchtkörper 1 geleitet wird, versorgt wird.

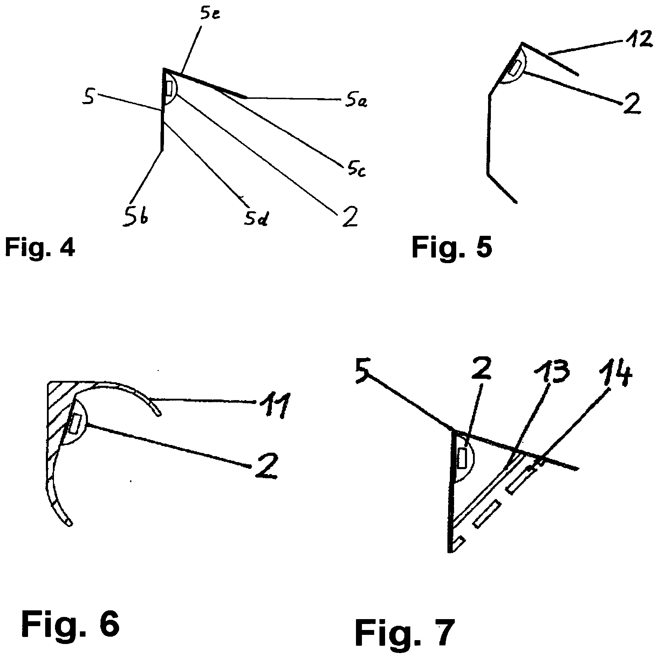

**Fig. 4** zeigt den Leuchtkörper 1 in der Schnittansicht. Das Profil 5 vereinigt gleich mehrere Funktionen in sich. Am Profil 5 wird die linienförmige Lichtquelle 2 befestigt, in einer bevorzugten Ausführung durch Kleben. Das Profil 5 begrenzt das Ausleuchtungsfeld, das die linienförmige Lichtquelle 2 erzeugt, dadurch, dass es lichtdicht ist und die Lichtstrahlen durch die beiden Kanten 5a und 5b begrenzt. Die Kante 5a begrenzt die Lichtstrahlen nach oben und verhindert dadurch ein direktes Blenden durch die Lichtstrahlen der linienförmigen Lichtquelle 2, sofern der längliche Leuchtkörper in einer niedrigen Höhe, in einer bevorzugten Ausführung ca. 0,6 m bis 1,0 m Höhe über Grund, montiert ist. Die untere Kante 5b begrenzt die Lichtstrahlen nach hinten und verhindert, dass Licht auf die Rückseite des Zauns und damit beispielsweise auf das Nachbargrundstück, fällt. Die Profil Innenseiten 5c und 5d des Profils S können als Reflektor ausgebildet werden und so die Leuchtwirkung der linienförmigen Lichtquelle 2 verstärken. In einer bevorzugten Ausführung besteht dazu das Profil 5 aus Metall und die Profilinnenseiten 5c und 5d sind metallisch blank oder poliert mit einer glänzenden Oberfläche ausgebildet. Der obere Teil 5e des Profils 5 stellt einen Schutz vor direkten Witterungseinwirkungen wie Regen, Schnee oder Sonnenbestrahlung für die linienförmige Lichtquelle 2 dar.

**Fig. 5** zeigt in einer Schnittdarstellung den länglichen Leuchtkörper 1 mit einem mehrfach gekanteten Profil 12 anstatt dem in **Fig. 4** gezeigten einfach gekanteten Profil 5.

**Fig. 6** zeigt in einer Schnittdarstellung den länglichen Leuchtkörper 1 mit einem gerundet ausgebildeten Profil 11 anstatt dem in **Fig. 4** und **Fig. 5** gezeigten: gekantetem Profil 5. Als weitere Optionen kann vor die linienförmige Lichtquelle 2 gemäß **Fig. 7** im Profil 5 eine im Wesentlichen durchsichtige Abdeckung 13 oder ein Abdeckgitter 14 oder beides als Schutz gegen Vandalismus und zusätzlichem Witterungsschutz gesetzt werden.

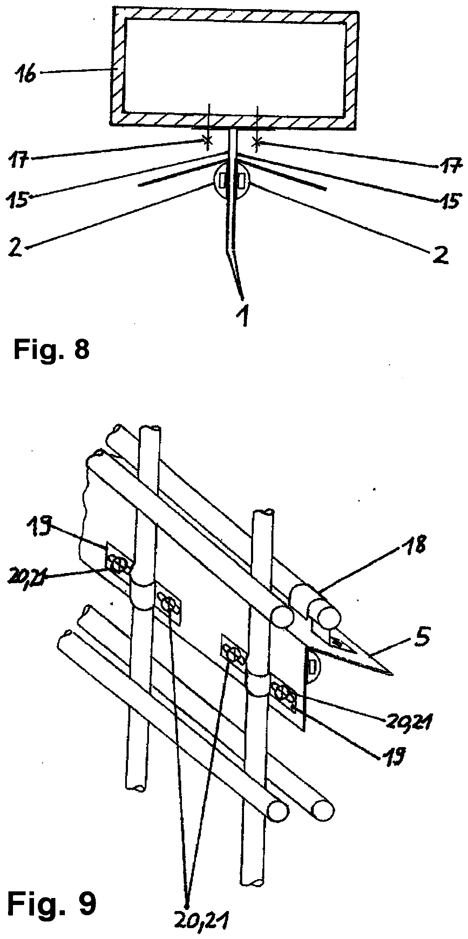

**Fig. 8** zeigt zwei längliche Leuchtkörper 1 mit linienförmigen Lichtquellen 2 Rücken an Rücken, die mit Laschen 15 an einem über den Leuchtkörpern befindlichem horizontalem oder schrägen oder geschwungenem Geländer oder Zaunprofil 16 mit Befestigungsschrauben 17 befestigt sind und die Bereiche links und rechts des Geländers ausleuchten.

In einer nicht dargestellten Ausführung kann auch eine einzelne linienförmige Lichtquelle 2 so unter einem Profil angeordnet werden, dass sie direkt nach unten strahlt.

Gemäß **Fig. 9** erfolgt die Befestigung des länglichen Leuchtkörpers 1 an einem Zaun, einem Geländer oder einer Gabione, bei denen die Struktur im Wesentlichen aus Drahtstäben besteht, mit mehreren Laschen, die horizontal verschiebbar und damit an die gegebenen Drahtpositionen anpassbar sind. Dabei können die Laschen 18 beispielsweise zur Umfassung horizontaler Drahtabschnitte ausgebildet sein oder als Laschen 19 zur vertikalen Umfassung von Drähten. Mittels Schrauben 20 und einer Unterlegplatte 21 werden die Laschen 18 oder 19 an das Profil 5 gezogen und klemmen dieses damit an den jeweiligen Drahtstab des Zauns, des Geländers oder der Gabione fest.

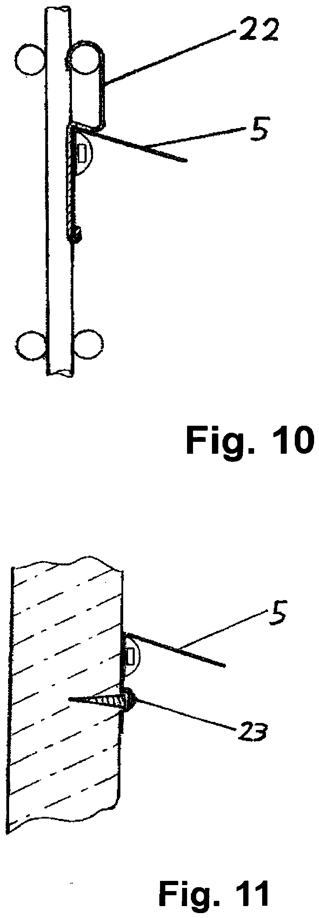

Eine weitere Ausführung zeigt **Fig. 10****,** bei der eine Lasche 22 auf das Profil 5 geklipst und damit der längliche Leuchtkörper 1 in einen horizontalen Drahtstab eingehängt wird.

**Fig. 11** zeigt die Befestigung in Mauern oder Zaunlatten, wobei das Profil 5 in der dargestellten Ausführung mit Schrauben 23 direkt auf dem Untergrund, also der Mauer oder den Zaunlatten oder Metallprofilen aufgeschraubt ist. Je nach Untergrund können normale Dübel für Stein oder Betonmauern verwendet werden oder selbstbohrende und selbstschneidende Schrauben, falls Zaunlatten beispielsweise aus Metall- oder Kunststoffprofilen bestehen.

Falls die Stromzufuhr über ein erdverlegtes Kabel erfolgen soll, so kann das Kabel 8 am Pfosten 3 entlang unter einer Abdeckung geführt werden. In einer Ausführung wird das Kabel 8 im Pfosten 3 mit einem seitlichen Kabelauslass oder einem am unteren Pfostenende befindlichen vertikalen Kabelauslass geführt. Dabei kann das Kabel 8 auch mit einer oder mehreren Steckverbindungen versehen sein.

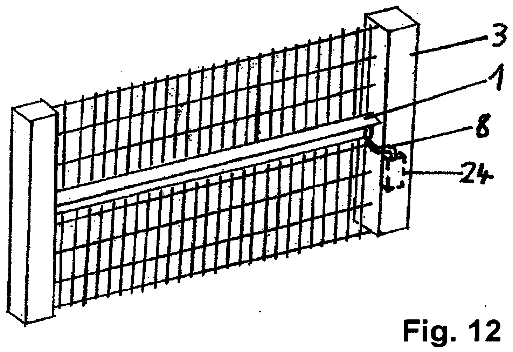

Gemäß **Fig. 12** kann die Stromquelle 24 in einen Zaun- oder Geländerpfosten 3 integriert sein. Das Kabel 8 führt dann vom länglichen Leuchtkörper 1 über eine Einführung in den Zaunpfosten 3. Die Stromquelle 24 besteht erfindungsgemäß mindestens aus einer Anschlussklemmeneinheit, an der die Stromzuführung mit Kabeln 8 zu den länglichen Leuchtkörpern 1 verbunden sind. Die Stromquelle 24 besteht in der dargestellten Ausführung aus einem Spannungstransformator, der die zugeführte Netzspannung in eine ungefährliche Kleinspannung umwandelt, die dann über Steckverbindungen 6 und Kabel 8 zu den länglichen Leuchtkörpern 1 geführt wird.

In einer nicht dargestellten Ausführung sind die Kabel 8 über Auslässe fest mit dem Pfosten 3 verbunden. Weiterhin kann die Stromquelle 24 einen Fernsteuerempfänger zur Steuerung des Lichts enthalten, wobei diese Steuerung beispielsweise zum Ein-Aus-Schalten, zum Dimmen, zum Regeln einer Lichtabfolge (z.B. Blinken) oder auch zur Farbsteuerung der Lichtquelle genutzt wird.

Falls der Pfosten in einer bevorzugten Ausführung aus Metall besteht, so enthält er für einen besseren Fernsteuerempfang Durchbrüche im Metall, die mit einem funkdurchlässigen und witterungsbeständigen Material abgedeckt sind. Die Fernsteuerung kann beispielsweise auf Basis einer Bluetooth-Verbindung, einer Infrarotübertragung oder einer WLan-Verbindung erfolgen.

In einer weiteren nicht dargestellten Ausführung ist die Stromquelle 24 in einem separaten Gehäuse, als einzeln aufstellbare Säule ausgebildet, ausgeführt. Zusätzlich kann diese Säule mit zusätzlichen Beleuchtungen und oder Steckdosen für Netzspannung für mobile elektrische Gartengeräte ausgestattet sein.

Ebenso nicht dargestellt ist eine Ausführung, bei der die Stromquelle 24 in einem Schaltkasten integriert ist, der an einer Wand, an einer Decke, auf dem Boden oder an einem Pfosten 3 oder an einer Zaunmatte 4 befestigt ist. Der Schaltkasten kann für eine Anwendung in Innenräumen oder einer witterungsgeschützten Ausführung für die Außenaufstellung ausgeführt sein.

Bei einer weiteren ebenso nicht dargestellten Ausführung besteht die Stromversorgung aus Solarzellen und Pufferbatterien, die in oder auf der Trägerstruktur, an dem sich auch die länglichen Leuchtkörper 1 befinden, integriert sind oder sich separat davon befinden.

### Bezugszeichenliste

- 1: Länglicher Leuchtkörper
- 2: Linienförmige Lichtquelle
- 3: Zaunpfosten
- 4: Zaunmatte
- 5: Profil
- 5a: Obere Profilkante
- 5b: Untere Profilkante
- 5c: Profilinnenseite
- 5d: Profilinnenseite
- 5e: Profil oberer Teil
- 6: Steckverbindung
- 7: Stecker
- 8: Kabel
- 9: Verschluss
- 10: Festes Anschlusskabel
- 11: Gerundet ausgebildetes Profil
- 12: Mehrfach gekantetes Profil
- 13: Lichtdurchlässige Abdeckung
- 14: Abdeckgitter
- 15: Laschen
- 16: Geländer- oder Zaunprofil
- 17: Befestigungsschrauben
- 18: Laschen zur horizontalen Umfassung von Drähten
- 19: Laschen zur vertikalen Umfassung von Drähten
- 20: Schraube
- 21: Unterlegplatte
- 22: Lasche
- 23: Schraube
- 24: Stromquelle

## Patentansprüche

1. Elektrisch betriebenes Beleuchtungssystem, wobei dieses Beleuchtungssystem zumindest einen länglichen Leuchtkörper (1) aufweist, der mit einem oder mehreren steckbaren oder fest verbundenen Kabeln (8) mit einer Stromversorgung verbunden ist und wobei der zumindest eine längliche Leuchtkörper (1) mindestens eine linienförmige Lichtquelle (2) enthält und an einem Profil (5) befestigt ist, wobei der zumindest eine längliche Leuchtkörper (1) an zumindest einem Ende eine elektrische Steckverbindung (6) aufweist und diese elektrische Steckverbindung (6) mit einem weiteren linienförmigen Leuchtkörper (1) oder einem anderen elektrischen Verbraucher verbunden ist oder sofern keine elektrische Verbindung mit einem weiteren linienförmigen Leuchtkörper (1) oder einem anderen elektrischen Verbraucher vorgesehen ist, mit einem Verschluss (9) verschlossen ist, wobei das Profil (5) überwiegend aus lichtundurchlässigem Material besteht und wobei zwischen einer oberen Kante (5a) und einer unteren Kante (5b) des Profils (5) eine den aus der linienförmigen Lichtquelle (2) austretenden Lichtstrahl begrenzende Lichtaustrittsöffnung ausgebildet ist und wobei das Profil (5) an den Innenseiten (5c) und (5d) reflektierend ausgebildet ist und wobei das Profil (5) einen die linienförmige Lichtquelle (2) vor Witterungseinflüssen schützenden oberen Teil (5e) aufweist, **dadurch gekennzeichnet, dass** die Stromversorgung aus einer Stromquelle (24) besteht, die einen Transformator zur Transformation der Versorgungsspannung in eine für die zumindest eine linienförmige Lichtquelle (2) geeignete Spannung enthält und dass das Profil (5) Befestigungselemente (18, 19, 20, 21, 22) aufweist und das Profil (5) mit diesen Befestigungselementen (18, 19, 20, 21, 22) an einer Trägerstruktur befestigt ist und dass die Stromquelle (24) in der Trägerstruktur oder in einer neben der Trägerstruktur angeordneten Säule integriert ist und dass die Trägerstruktur ein Zaun oder eine Gabione oder ein Geländer oder eine Mauer oder ein Tor ist und dass die Stromquelle (24) in einem Zaun- oder Gabionen- oder Geländer- oder Mauer- oder Torpfosten (3) oder dem Geländer integriert ist

2. Beleuchtungssystem nach Anspruch 1, **dadurch gekennzeichnet, dass** die elektrische Verbindung (6) ein Kabel (8, 10) aufweist, das durch eine einseitige, eine mehrseitige oder allseitige Abdeckung vor Vandalismus und Witterungseinflüssen geschützt ist.

3. Beleuchtungssystem nach einem der vorhergehenden Ansprüche, **dadurch gekennzeichnet, dass** die mindestens eine linienförmige Lichtquelle (2) aus aneinandergereihten Einzellichtquellen besteht.

4. Beleuchtungssystem nach einem der vorgenannten Ansprüche, **dadurch gekennzeichnet, dass** die Stromquelle (24) eine die Leuchtstärke oder die Lichtfarbe oder die Leuchtabfolge beeinflussende Reguliereinheit aufweist und dass diese Reguliereinheit über Tasten oder Drehregler oder Schieberegler oder eine drahtlose Verbindung betätigbar ist.

5. Beleuchtungssystem nach einem der vorgenannten Anprüche, **dadurch gekennzeichnet, dass** der Zaun- oder der Gabionen- oder der Geländer- oder der Mauer- oder der Torpfosten oder das Geländer oder die Säule im Wesentlichen aus Metall gebildet sind, wobei Öffnungen vorgesehen sind, die mit funkdurchlässigem und witterungsbeständigem Material abgedeckt sind.

6. Beleuchtungssystem nach einem der vorhergehenden Ansprüche, **dadurch gekennzeichnet, dass** am Profil (5) eine im Wesentlichen durchsichtige Abdeckung (13) oder ein Abdeckgitter (14) oder eine Kombination hieraus vor der linienförmige Lichtquelle (2) vorgesehen ist.

7. Beleuchtungssystem nach einem der vorhergehenden Ansprüche, **dadurch gekennzeichnet, dass** die Stromversorgung eine Photovoltaikanlage aufweist, deren Solarmodule entweder auf dem Profil (5) befestigt sind oder deren Solarmodule einen Teil des Profils (5) bilden.

## Claims

1. Electrically powered lighting system, wherein this lighting system comprises at least one elongated light body (1) which is connected to a power supply by one or more plug-in or firmly attached cable(s) (8), and the at least one elongated light body (1) containing at least one linear light emitting source (2) and being fixed to a profile (5); wherein the at least one elongated light body (1) is, on at least one end, equipped with an electrical plug connection (6) and this electrical plug connection (6) being connected to one more elongated light body (1) or another electrical load or, unless any electrical connection with one more elongated light body (1) or another electrical load is provided, being closed with a plug (9); wherein the profile (5) consists mainly of opaque material and between an upper edge (5a) and a lower edge (5b) of the profile (5) there is a light emission aperture limiting the light beam coming from the linear light emitting source (2), and the profile (5) being reflective on the inner surfaces (5c) and (5d) and the profile (5) being equipped with an upper part (5e) protecting the linear light emitting source (2) against the effects of weather, **characterized in that** the power supply consist of a power source (24) which contains a transformer for transforming the supply voltage to any voltage suitable for the at least one linear light emitting source (2), and that the profile (5) includes fastening elements (18, 19, 20, 21, 22) and the profile (5) is fixed to a support structure by these fastening elements (18 19, 20, 21, 22), and that the power source (24) is integrated in the support structure or a pillar being positioned next to the support structure, and the support structure being a fence or a gabion or a railing or a wall or a gate, and the power source (24) being integrated in a fence pillar or gabion pillar or railing pillar or wall pillar or gate pillar (3) or in the railing.

2. Lighting system according to claim 1, **characterized in that** the electrical connection (6) contains a cable (8, 10) which is protected against vandalism and the effects of weather by a cover on one side, multiple sides or all sides.

3. Lighting system according to one of the previous claims, **characterized in that** the at least one linear light emitting source (2) consists of single light emitting sources being aligned next to each other.

4. Lighting system according to one of the previous claims, **characterized in that** the power source (24) contains an adjusting unit for regulating the luminosity or the light color or the changing light sequence, and that this adjusting unit is operable by the use of buttons or rotary knobs or slide controls or a wireless connection.

5. Lighting system according to one of the previous claims, **characterized in that** the fence pillar or gabion pillar or railing pillar or wall pillar or gate pillar or the railing or the pillar are mainly made of metal, and that openings are provided which are covered with radio permeable and weather-resistant material.

6. Lighting system according to one of the previous claims, **characterized in that** the profile (5) is provided with a mainly transparent cover (13) or a cover grille (14) or a combination of both in front of the linear light emitting source (2).

7. Lighting system according to one of the previous claims, **characterized in that** the power supply contains a photovoltaic system whose solar modules are either fixed on the profile (5) or whose solar modules form a part of the profile (5).

## Revendications

1. Système d'éclairage électrique, ledit système d'éclairage comprenant au moins un corps lumineux oblong (1) qui est connecté à une source d'alimentation par un ou plusieurs câbles enfichables ou solidement fixés (8), et le au moins un corps lumineux oblong (1) contenant au moins une source linéaire émettant de lumière (2) et étant fixé à un profil (5) ; le au moins un corps lumineux oblong (1) ayant sur au moins une extrémité un connecteur à fiches électrique (6) et ledit connecteur à fiches électrique (6) étant connecté par un autre corps lumineux oblong (1) ou un autre consommateur électrique ou, si aucune connexion électrique avec un autre corps lumineux oblong (1) ou un autre consommateur électrique n'est prévue, fermé par un bouchon (9) ; le profil (5) étant principalement d'un matériau opaque et entre un bord supérieur (5a) et un bord inférieur (5b) du profil (5) un orifice de sortie de la lumière étant formé qui limite un faisceau de lumière émis de la source linéaire émettant de lumière (2), et le profil (5) étant construit d'une manière réfléchissante sur les côtés intérieures (5c) et (5d) et le profil (5) comprenant une partie supérieure (5e) qui protège la source linéaire émettant de lumière (2) contre les intempéries, **caractérisé en ce que** l'alimentation électrique consiste d'une source d'alimentation (24) qui comprend un transformateur pour transformer la tension d'alimentation en une tension appropriée pour la au moins une source linéaire émettant de lumière (2), et que le profil (5) contient des éléments de fixation (18, 19, 20, 21, 22) et le profil (5) est fixé par lesdits éléments de fixation (18, 19, 20, 21, 22) à une structure de support, et que la source d'alimentation (24) est intégrée dans la structure de support ou un pilier se trouvant à côté de la structure de support, et que ladite structure de support est une clôture ou un gabion ou une balustrade ou un mur ou un portail, et que la source d'alimentation (24) est intégrée dans un pilier de clôture ou de gabion ou de balustrade ou de mur ou de portail (3) ou bien dans la balustrade.

2. Système d'éclairage selon la revendication 1, **caractérisé en ce que** la connexion électrique (6) comprend un câble (8, 10) qui est protégé, par un recouvrement disposé sur un côté, plusieurs côtés ou tous les côtés, contre le vandalisme et les intempéries.

3. Système d'éclairage selon un des revendications précédentes, **caractérisé en ce que** la au moins une source linéaire émettant de lumière (2) est composée de sources émettant de lumière individuelles juxtaposées.

4. Système d'éclairage selon un des revendications précédentes, **caractérisé en ce que** la source de courant (24) comprend un dispositif de réglage pour réguler la luminosité ou la couleur de la lumière ou la séquence changeante de lumière et que ledit dispositif de réglage peut être actionné par des touches ou des boutons rotatifs ou des curseurs ou une connexion sans fil.

5. Système d'éclairage selon un des revendications précédentes, **caractérisé en ce que** le pilier de clôture ou de gabion ou de balustrade ou de mur ou de portail ou bien la balustrade ou bien le pilier sont principalement formés de métal, et des orifices sont prévus qui sont couverts d'un matériau radio transparent et résistant aux intempéries.

6. Système d'éclairage selon un des revendications précédentes, **caractérisé en ce qu'au** profil (5) un recouvrement principalement transparent (13) ou une grille de recouvrement (14) ou une combinaison des deux est prévu devant la source linéaire émettant de lumière (2).

7. Système d'éclairage selon un des revendications précédentes, **caractérisé en ce que** l'alimentation électrique contient une installation photovoltaïque dont les panneaux solaires sont installés au profil (5) ou bien dont les panneaux solaires forment une partie du profil (5).
